# FASCICULE DE BREVET EUROPEEN

(11) **EP 3 283 710 B1**
(45) Date de publication et mention de la délivrance du brevet: **05.09.2018**
(21) Numéro de dépôt: 16731194.3
(22) Date de dépôt: 07.04.2016
(51) Int. Cl.: E04H 4/00

(54) **STRUCTURE FLOTTANTE**
SCHWIMMENDE STRUKTUR
FLOATING STRUCTURE

(30) Priorité: 14.04.2015 FR 1553220
(43) Date de publication de la demande: 21.02.2018
(73) Titulaire: Desjoyaux, Pierre-Louis, Pukhet 83000 (TH); Hoang Tuan, Dung, Hanoi (VN)
(72) Inventeur: Desjoyaux, Pierre-Louis, Pukhet 83000 (TH); Hoang Tuan, Dung, Hanoi (VN)
(74) Mandataire: Cabinet Laurent & Charras
(86) Numéro de dépôt international: PCT/FR2016/050804
(87) Numéro de publication internationale: WO 2016/166451

(56) Documents cités:
- JP-A- H07 158 296
- US-A- 3 078 472
- US-A- 5 638 556
- US-A1- 2011 094 025

## Description

L'invention se rattache au secteur technique des bassins pour piscine, et concerne plus particulièrement un bassin destiné à être positionné sur un plan d'eau, en position de flottaison.

Il est connu de l'état de la technique des stations flottantes pour exercices aquatiques permettant à toute personne de pratiquer, en eau profonde, tous types d'exercices, tels que nage, plongée, ..... et ce, quelles que soient les périodes de l'année, les conditions atmosphériques, et la qualité de l'eau où est installée la station.

Notamment, une solution avantageuse ressort de l'enseignement du document EP 1 893 828, qui concerne une station flottante pour exercices aquatiques comprenant au moins un cadre flottant assujetti à des moyens de stabilité et d'ancrages par rapport à un plan d'eau.

Le cadre flottant est rendu solidaire d'une poche, généralement en PVC, apte à être immergée dans l'eau pour constituer une structure apte à permettre l'évolution d'au moins une personne. Cette poche est reliée à un système d'alimentation en eau, et assujettie à un système de filtration. Par exemple, le système de filtration peut être constitué par un ensemble immergé dans l'eau de la poche, et relié à un ensemble de pompage. L'ensemble de filtration peut être monté sur un support avec capacité de déplacement pour s'adapter, si nécessaire, au niveau de l'eau. Généralement, les côtés du cadre sont constitués par des caissons faisant office de pontons flottants.

Le document US 2011/094025 A1 décrit une station flottante similaire.

A partir de cet état de la technique, un des problèmes techniques que se propose de résoudre l'invention est de maîtriser la forme voulue de la poche, qui a tendance à flotter et à se déformer, après immersion, du fait des mouvements de l'eau où est installée la station ou structure flottante.

Pour résoudre ce problème, il a été conçu et mis au point une structure flottante, du type de celle comprenant, de manière connue, des pontons reliés entre eux pour constituer au moins un cadre flottant fermé de forme géométrique quelconque, et assujetti à des moyens de stabilité et d'ancrage par rapport à un plan d'eau, le ou lesdits cadre(s) (n) étant rendus solidaires d'une poche étanche destinée à être remplie d'eau pour permettre l'évolution d'au moins une personne, ladite poche étant assujettie à un système de filtration.

Selon l'invention, les parois de la poche sont équipées d'éléments filiformes souples présentant des moyens d'accouplement élastiques, d'une part, à une ossature rendue solidaire du ou des cadre(s) et destinée à être immergée dans le plan d'eau, et d'autre part, à une partie de la face de dessous des pontons.

Il ressort de ces caractéristiques que les moyens d'accouplement élastiques, permettent de maintenir complètement la forme de la poche.

Dans une forme de réalisation, les éléments filiformes sont des câbles et les moyens d'accouplement élastiques sont des ressorts, tendeurs ou similaires, dont les extrémités présentent des éléments de fixation démontables, d'une part, aux éléments filiformes, et d'autre part, à l'ossature et à la face de dessous des pontons.

Un autre problème que se propose de résoudre l'invention est de pouvoir installer et fixer la poche, en étant hors d'eau. Dans ce but, l'ossature support de la poche est montée avec capacité de déplacement en hauteur par rapport aux pontons du ou des cadre(s) pour occuper une position hors d'eau et une position immergée.

Il résulte de ces caractéristiques, qu'après avoir rempli en eau la poche, l'ossature à laquelle est assujettie ladite poche descend naturellement par gravité.

Pour résoudre ce problème de déplacement en hauteur de l'ossature par rapport aux pontons, cette dernière est constituée par une pluralité de poteaux, dont l'une de leur extrémité destinée à être immergée, est accouplée à des barres délimitant un périmètre fermé en correspondance avec celui résultant des bords internes du ou des cadre(s). Les poteaux sont engagés librement avec capacité de déplacement en hauteur dans les pontons. A noter que les poteaux peuvent être constitués par des tubes télescopiques.

Selon une autre caractéristique, chaque poteau est relié à sa base au niveau de sa liaison avec la barre de l'ossature, aux bords externes du ou des cadre(s), par l'intermédiaire d'un câble souple, de manière à former une triangulation.

Ces caractéristiques permettent d'éviter une déformation de la structure immergée qui pourrait se produire, sous l'effet d'une traction exercée par les utilisateurs.

Selon une autre caractéristique, les extrémités des poteaux considérées à l'opposé de leurs extrémités immergées, présentent des semelles d'appui et de fixation avec le cadre, et plus spécifiquement au niveau des bords internes des caissons constituant ledit cadre.

Selon une autre caractéristique, les pontons sont constitués par des caissons, dont les bords internes présentent un profil d'accrochage et de blocage du pourtour externe de la poche.

Un autre problème, que se propose de résoudre l'invention, est de permettre, si nécessaire, de marcher en surface du bassin, lors de l'assemblage, en toute sécurité, de la poche, avec également pour objectif de renforcer le fond de cette dernière, constituant ainsi une sécurité supplémentaire. Dans ce but, la poche reçoit un filet indépendant, en sous face.

Un autre problème que se propose de résoudre l'invention, est de permettre de chauffer l'eau contenue dans la poche, au moyen de l'énergie solaire. Dans ce but, les caissons sont assujettis à des panneaux solaires et présentent un circuit de circulation de l'eau en communication avec l'eau contenue dans la poche. Ou bien les panneaux solaires sont intégrés au moment de la conception des caissons.

L'invention est exposée ci-après plus en détail à l'aide des figures des dessins annexés dans lesquels :

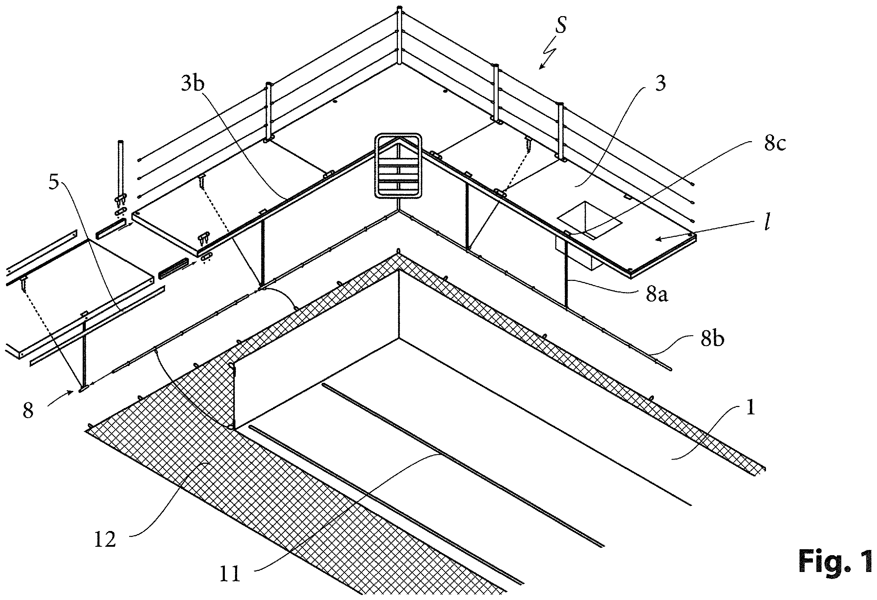

- la figure 1 est une vue partielle en perspective, avant montage des principaux éléments de la structure flottante, selon l'invention,
- la figure 2 est une vue en plan d'un caisson,
- les figures 3 et 4 sont des vues de côté, correspondant à la figure 2,
- la figure 5 est une vue de côté, correspondant à la figure 4,
- la figure 6 montre différents détails, au niveau de l'assemblage des parties constitutives du caisson illustré aux figures 2 à 5, notamment au niveau du profil d'accrochage de la poche,
- la figure 7 est une vue en coupe transversale de la structure flottante,
- les figures 8 et 9 sont des détails de la fixation de la poche par rapport au caisson, (figure 8), et par rapport à la base de l'ossature télescopique, (figure 9),

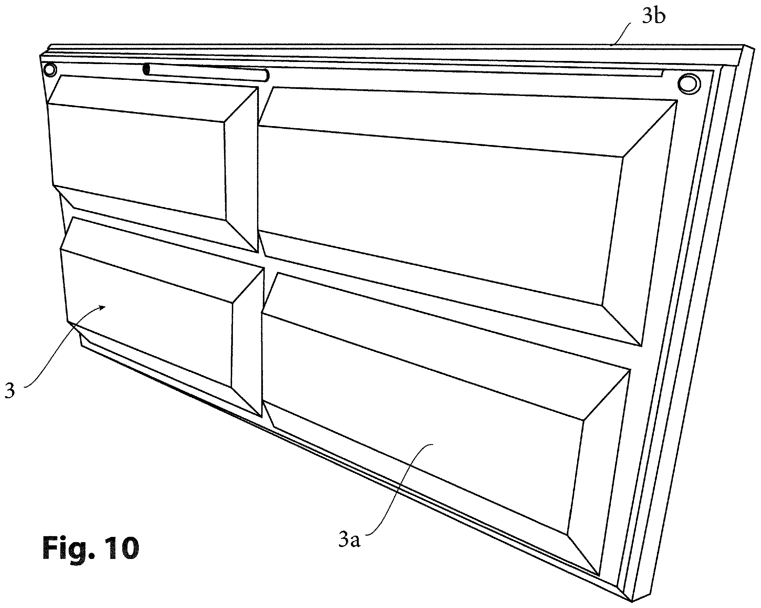

- la figure 10 est une vue en perspective et de dessous d'un élément de caisson,

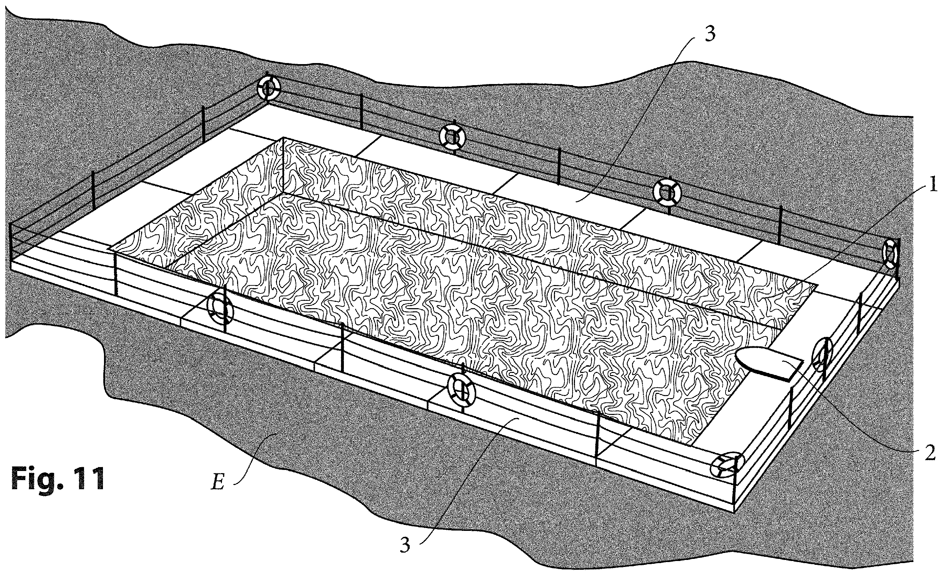

- la figure 11 montre un exemple de réalisation d'une structure, selon les caractéristiques de l'invention, installée sur un plan d'eau,

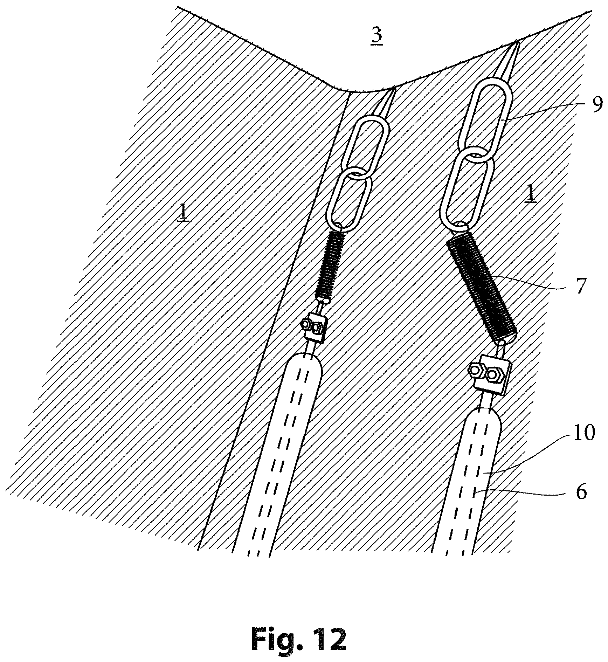

- la figure 12 est une vue partielle en perspective, montrant les fixations de la poche par rapport au caisson,
- la figure 13 est une vue partielle en perspective, montrant la mise en place de la poche, avant sa mise en eau, c'est-à-dire, avant enfoncement de l'ossature support,
- la figure 14 est une vue d'une forme de réalisation d'un caisson agencé pour faire office de capteur solaire,
- la figure 15 est une vue en plan et en coupe de la structure flottante, les caissons étant conformes à celui illustré figure 14, pour la circulation d'un fluide, dans le cas d'un chauffage par capteurs solaires intégrés.

Comme indiqué, la structure flottante, désignée dans son ensemble par (S) comprend des pontons (P), reliés entre eux, pour constituer un cadre flottant fermé, de forme géométrique quelconque, notamment rectangulaire. L'ensemble, ainsi constitué, est assujetti à des moyens de stabilité et d'ancrage, par rapport à un plan d'eau (E). Comme il sera indiqué dans la suie de la description, le cadre flottant est rendu solidaire d'une poche étanche (1), destinée à être remplie d'eau, pour permettre l'évolution d'au moins une personne. La poche (1) est assujettie à tous types de systèmes de filtrations (2). Ces caractéristiques générales ressortent, comme indiqué, de l'enseignement du brevet EP 1 893 828.

Selon l'invention, à partir du concept de base défini dans ce brevet EP 1 893 828, le but recherché est de pouvoir réaliser des bassins rectangulaires de toutes profondeurs, sans pour cela exclure d'autres formes géométriques, tout en maîtrisant la forme voulue de la poche (1), qui a naturellement tendance à flotter et à se déformer, après immersion, à cause des mouvements du plan d'eau où est installée la structure flottante.

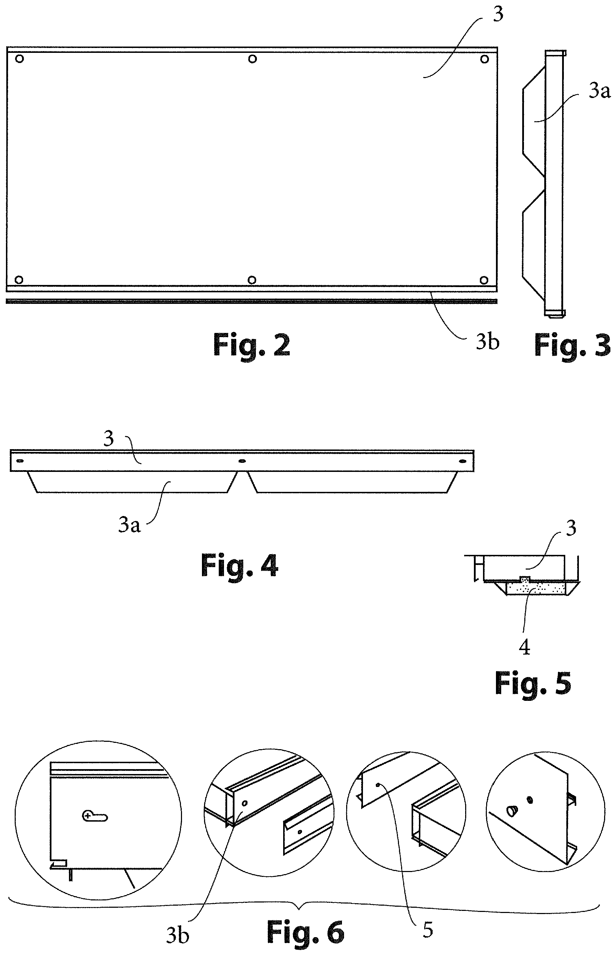

Les pontons (P), reliés entre eux pour constituer un cadre fermé de forme rectangulaire dans l'exemple des dessins, sont constitués par des caissons (3), comme illustrés, notamment, aux figures 2 à 6.

Par exemple, chaque caisson (3), de forme générale quadrangulaire, présente, en débordement de sa face de dessous, des bossages (3a) aptes à être garnis d'un matériau flottant, par exemple sous forme d'une mousse (4).

Le bord longitudinal interne de chaque caisson (3) présente un profil en section (3b) spécifique pour permettre le clipage d'un profilé (5), permettant d'accrocher et de bloquer le bord supérieur de la poche (1), avantageusement réalisée en PVC armé. L'assemblage, en alignement et en angle, des différents caissons (3) s'effectue par tous moyens connus et appropriés.

A noter que plusieurs caissons (3) peuvent être assemblés, en juxtaposition, pour augmenter la largeur des pontons de la structure flottante.

Selon une caractéristique importante de l'invention, les parois de la poche (1) sont équipées d'éléments filiformes souples (6) présentant des moyens d'accouplement élastiques (7), d'une part à une ossature (8), assujettie aux caissons (3) constituant le cadre, et d'autre part, aux caissons (3). Cette ossature (8), comme il sera indiqué dans la suite de la description, est destinée à être immergée dans le plan d'eau (E).

Les éléments filiformes (6) sont avantageusement constitués par des câbles. Les moyens d'accouplement (7) sont constitués par des ressorts, tendeurs ou autres, dont les extrémités présentent des éléments de fixation démontables (8), d'une part aux câbles (6), et d'autre part à l'ossature (8), et à la face de dessous des caissons (3).

Par exemple, les éléments de fixation démontables sont constitués par de simples mousquetons.

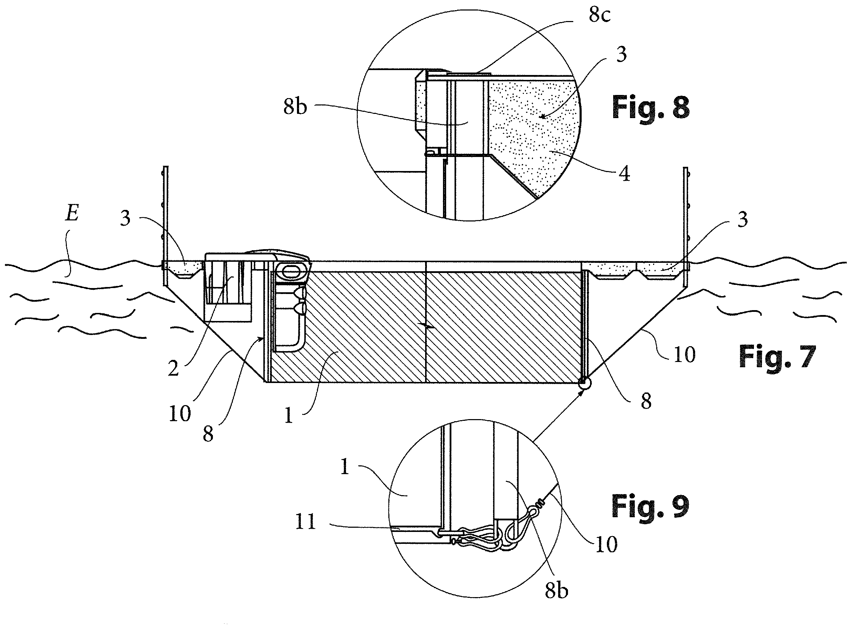

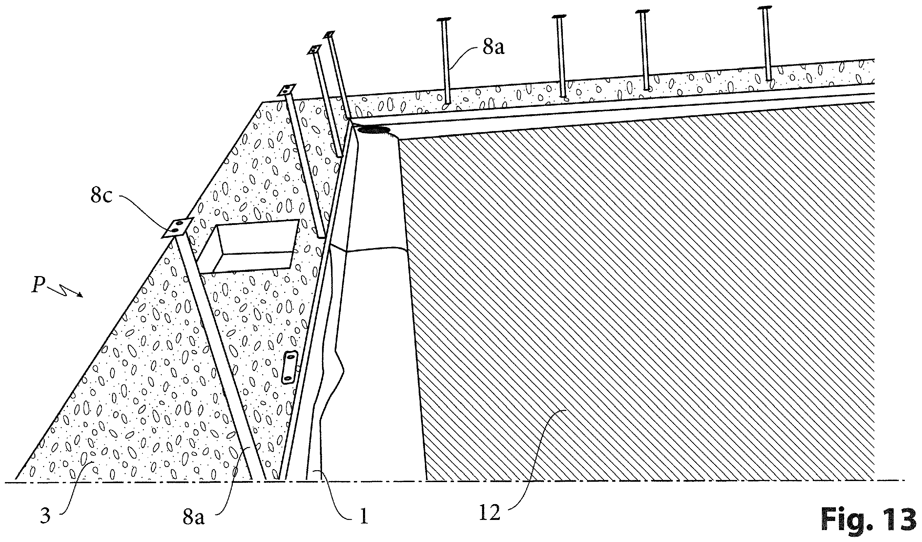

Selon une autre caractéristique, l'ossature support (8) de la poche (1), est montée avec capacité de déplacement en hauteur, par rapport aux caissons(3), afin d'occuper une position hors d'eau (figure 13) ou une position immergée (figure 7). Cette ossature (8) est constituée par une pluralité de poteaux (8a), engagés librement avec capacité de déplacement en hauteur, dans l'épaisseur des caissons (3), au niveau de leurs bords longitudinaux internes. Les extrémités des poteaux (8a) destinées à être immergées dans le plan d'eau, sont accouplées à des barres (8b), afin de délimiter un périmètre fermé, en correspondance avec celui résultant du bord interne des caissons (3), après assemblage (par exemple de forme rectangulaire dans l'exemple des dessins annexés).

Il résulte de ces dispositions, que les barres (8) fixées au pied des poteaux (8a) de l'ossature (8) sont destinées à permettre l'accrochage des câbles (6), que présentent les parois de la poche en PVC (1). On rappelle que la fixation des câbles (6) s'effectue par l'intermédiaire des ressorts (7), en combinaison avec les éléments de fixation démontables (9).

En outre, chaque poteau (8a) est relié à sa base, c'est-à-dire au niveau de son accouplement avec la barre (8b), au bord externe d'un caisson (3), par l'intermédiaire d'un câble souple (10), de manière à former une triangulation.

Ces dispositions permettent d'éviter une déformation de la structure immergée, qui pourrait se produire sous l'effet d'un effort de traction exercé par les utilisateurs évoluant à l'intérieur de la poche (1). La fixation de la poche (1), tant au niveau de l'ossature (8), que des bords internes des caissons (3), autrement dit en partie haute et en partie basse de la poche (1), par l'intermédiaire des ressorts (7), confère une certaine élasticité, qui permet de maintenir la poche (1) en maîtrisant parfaitement la forme voulue de la poche, en lui évitant, par conséquent, de se déformer sous l'effet des forces générées par l'eau dans laquelle est immergée ladite poche.

A titre indicatif, les câbles (6) sont fixés au niveau des faces externes de la poche (1), sensiblement tous les cinquante centimètres, en étant, par exemple, intégrés dans des gaines (10).

Les extrémités des poteaux (8b), considérées à l'opposé de leurs extrémités immergées accouplées aux barres (8b), présentent une semelle d'appui et de fixation (8c), au niveau du bord interne des caissons (3).

Le fait que l'ossature support (8) de la poche (1) soit montée avec capacité de déplacement en hauteur par rapport aux caissons (3), permet de fixer la poche (1) et le profil de finition en étant hors d'eau (figure 13). Après remplissage de la poche, cette ossature support (8), à laquelle est assujettie la poche, descend naturellement, par gravité, jusqu'à ce que les semelles d'appui et de fixation (8c) des poteaux (8a) viennent en appui sur le bord interne des caissons (3). Il suffit ensuite de fixer l'ossature support (8) dans cette position immergée.

On prévoit également d'intégrer dans le fond de la poche (1) des barres métalliques (11), afin de maintenir une certaine planimétrie du fond. Les barres sont aptes à être accrochées à l'ossature support (8), notamment au niveau des barres (8b).

Selon une autre caractéristique, la poche (1) peut recevoir un filet indépendant (12). Ce filet de sécurité (12) permet de marcher en surface pour l'assemblage de la poche (figure 13), et assure également un renforcement du fond du bassin.

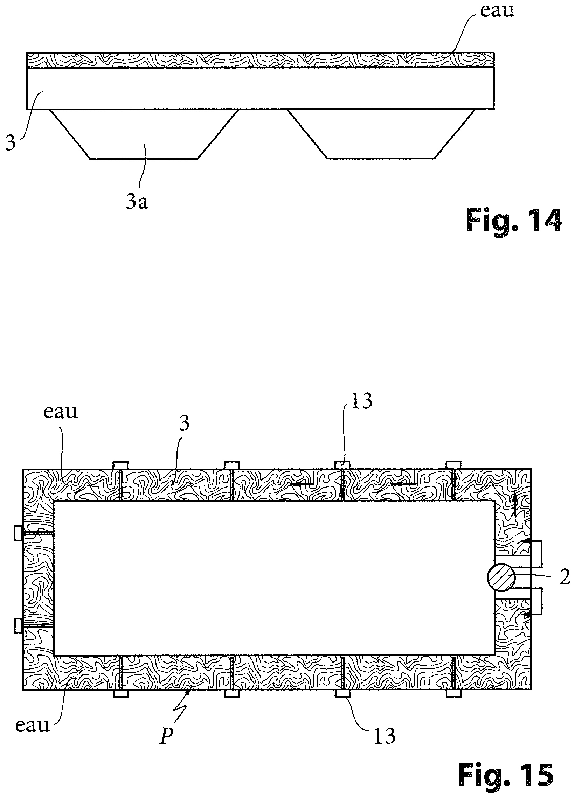

Dans une forme de réalisation, illustrée figures 14 et 15, les différents caissons (3) sont agencés pour faire office de capteurs solaires, permettant la circulation d'un fluide, notamment de l'eau, que contient la poche, en combinaison avec le système de filtration (2). Dans ce cas, les différents caissons présentent des systèmes de raccordement hydrauliques (13) au niveau de leurs accouplements.

Comme il ressort de l'enseignement du brevet EP 1 893 828, le système de filtration est de tous types connus et appropriés pour un homme du métier, et conformé pour permettre la filtration de l'eau contenue dans la poche (1).

On peut, par exemple, utiliser un système mettant en oeuvre un filtre à sable ou autres, assujetti à tout système d'alimentation électrique ou solaire.

Par exemple, comme le montre la figure 7, ce système peut être constitué par un ensemble de filtration immergé dans l'eau de la poche (1) et relié à un ensemble de pompage, qui peut être à l'extérieur de la poche ou se présenter sous forme d'une pompe immergée. L'ensemble de filtration peut, par ailleurs, être montée avec capacité de déplacement en hauteur, pour s'adapter au niveau de l'eau, pour être immergé avec l'ensemble de la structure.

Par ailleurs, pour assurer la stabilité et l'ancrage de l'ensemble de la structure, cette dernière peut être assujettie à des bouées accrochées au fond du plan d'eau, et réglées à la profondeur du bassin, afin de contrôler la hauteur de remplissage et d'améliorer la planimétrie du fond de la poche, permettant d'assurer une sécurité supplémentaire pour les utilisateurs.

Bien évidemment, l'ensemble de la structure flottante, selon les caractéristiques de l'invention, présente tous types d'aménagements extérieurs, tels que garde-corps, éclairages, passerelle, plongeoir, échelle,....

Les avantages ressortent bien de la description. En particulier, on souligne et on rappelle la maîtrise de la forme souhaitée de la poche, afin de s'affranchir de la force exercée par l'eau du bassin, où est immergée ladite poche, afin d'éviter, par conséquent, toute déformation de la poche qui garde sa forme initiale, rectangulaire ou autres.

On note également la facilité de fixation de l'ensemble de la poche, par rapport à l'ossature flottante, étant donné que cette dernière peut être effectuée hors d'eau, en considérant le montage avec capacité de déplacement en hauteur de l'ossature support, où est accrochée ladite poche.

## Revendications

1. Structure flottante comprenant des pontons (P) reliés entre eux pour constituer au moins un cadre flottant fermé de forme géométrique quelconque, et assujetti à des moyens de stabilité et d'ancrage par rapport à un plan d'eau, le ou lesdits cadre(s) (n) étant rendus solidaires d'une poche étanche (1) destinée à être remplie d'eau pour permettre l'évolution d'au moins une personne, ladite poche (1) étant assujettie à un système de filtration (2), les parois de la poche (1) étant équipées d'éléments filiformes souples (6) présentant des moyens d'accouplement élastiques (7), d'une part, à une ossature (8) rendue solidaire du ou des cadre(s) et destinée à être immergée dans le plan d'eau, et d'autre part, à une partie de la face de dessous des pontons (P).

2. Structure selon la revendication 1, ***caractérisée* en ce que** les éléments filiformes (6) sont des câbles.

3. Structure selon la revendication 1, ***caractérisée* en ce que** les moyens d'accouplement élastiques (7) sont des ressorts, dont les extrémités présentent des éléments de fixation démontables (9), d'une part, aux éléments filiformes (6), et d'autre part, à l'ossature (8) et à la face de dessous des pontons (P).

4. Structure selon la revendication 1, ***caractérisée* en ce que** l'ossature support (8) de la poche (1) est montée avec capacité de déplacement en hauteur par rapport aux pontons (P) du ou des cadre(s) pour occuper une position hors d'eau et une position immergée.

5. Structure selon la revendication 4, ***caractérisée* en ce que** l'ossature support (8) est constituée par une pluralité de poteaux (8a), dont l'une de leurs extrémités destinée à être immergée, est accouplée à des barres (8b) délimitant un périmètre fermé en correspondance avec celui résultant des bords internes du ou des cadre(s).

6. Structure selon la revendication 5, ***caractérisée* en ce que** les poteaux (8b) sont engagés librement avec capacité de déplacement en hauteur, dans les pontons (P).

7. Structure selon la revendication 5, ***caractérisée* en ce que** chaque poteau (8a) est relié à sa base, au niveau de sa liaison avec la barre (8b) aux bords externes du ou des cadre(s), par l'intermédiaire d'un câble souple (10), de manière à former une triangulation.

8. Structure selon la revendication 5, ***caractérisée* en ce que** les extrémités des poteaux (8a) considérées à l'opposé de leurs extrémités immergées, présentent des semelles (8c) d'appui et de fixation avec le cadre.

9. Structure selon la revendication 1, ***caractérisée* en ce que** les pontons (P) sont constitués par des caissons (3), dont les bords internes présentent un profil d'accrochage et de blocage du pourtour externe de la poche (1).

10. Structure selon la revendication 1, ***caractérisée* en ce que** la poche (1) reçoit un filet indépendant (12), en sous face.

11. Structure selon la revendication 9, ***caractérisée* en ce que** les caissons (3) sont assujettis à des panneaux solaires ou intégrent des panneaux solaires et, présentent un circuit de circulation de l'eau en communication avec l'eau contenue dans la poche (1).

12. Structure selon la revendication 1, ***caractérisée* en ce que** des barres métalliques (11) sont intégrées dans le fond de la poche (1).

13. Structure selon la revendication 12, **caractérisée en ce que** les barres métalliques (11) sont accrochées à l'ossature support (8).

## Patentansprüche

1. Schwimmende Struktur mit Pontons (P), die miteinander verbunden sind, um mindestens einen geschlossenen schwimmenden Rahmen beliebiger geometrischer Form zu bilden, und die an Mitteln zur Stabilität und Verankerung in Bezug auf eine Wasserfläche befestigt sind, wobei der oder die Rahmen (n) fest mit einer wasserdichten Pfanne (1) verbunden sind, die dazu vorgesehen ist, mit Wasser gefüllt zu werden, um die Ausbreitung von mindestens einer Person zu ermöglichen, wobei die Pfanne (1) an einem Filtrationssystem (2) befestigt ist, wobei die Wände der Pfanne (1) mit biegsamen fadenförmigen Elementen (6) ausgestattet sind, die elastische Kupplungsmittel (7) einerseits an einem Gerüst (8), das mit dem oder den Rahmen fest verbunden ist und dafür vorgesehen ist, in die Wasserfläche eingetaucht zu werden, und andererseits an einem Teil der Unterseite der Pontons (P) aufweisen.

2. Struktur nach Anspruch 1, ***dadurch gekennzeichnet,* dass** die fadenförmigen Elemente (6) Kabel sind.

3. Struktur nach Anspruch 1, ***dadurch gekennzeichnet,* dass** die elastischen Kupplungsmittel (7) Federn sind, deren Enden lösbare Befestigungselemente (9), einerseits an den fadenförmigen Elementen (6) und andererseits am Gerüst (8) und an der Unterseite der Pontons (P) aufweisen.

4. Struktur nach Anspruch 1, ***dadurch gekennzeichnet,* dass** das Traggerüst (8) der Pfanne (1) in Bezug auf die Pontons (P) des Rahmens oder der Rahmen höhenverstellbar montiert ist, um eine Position außerhalb des Wassers und eine Eintauchposition einzunehmen.

5. Struktur nach Anspruch 4, ***dadurch gekennzeichnet,* dass** das Traggerüst (8) aus einer Mehrzahl von Pfosten (8a) besteht, deren eines der Enden, das zum Eintauchen vorgesehen ist, mit Stangen (8b) verbunden ist, die einen geschlossenen Umfang abgrenzen, welcher jenem sich aus den Innenrändern des Rahmens oder der Rahmen ergebenden Umfang entsprechen.

6. Struktur nach Anspruch 5, ***dadurch gekennzeichnet,* dass** die Pfosten (8b) in den Pontons (P) mit der Höhenverstellbarkeit frei im Eingriff stehen.

7. Struktur nach Anspruch 5, ***dadurch gekennzeichnet,* dass** jeder Pfosten (8a) an seiner Verbindung mit der Stange (8b) an den Außenrändern des Rahmens oder der Rahmen über ein biegsames Kabel (10) mit seiner Basis verbunden ist, um eine Triangulation zu bilden.

8. Struktur nach Anspruch 5, ***dadurch gekennzeichnet,* dass** die Enden der gegenüber ihren eingetauchten Enden betrachteten Pfosten (8a), Stütz- und Befestigungsplatten (8c) mit dem Rahmen aufweisen.

9. Struktur nach Anspruch 1, ***dadurch gekennzeichnet,* dass** die Pontons (P) aus Kassetten (3) bestehen, deren Innenränder ein Profil zum Befestigen und Arretieren des Außenumfangs der Pfanne (1) aufweisen.

10. Struktur nach Anspruch 1, ***dadurch gekennzeichnet,* dass** die Pfanne (1) auf der Unterseite ein eigenständiges Netz (12) erhält.

11. Struktur nach Anspruch 9, ***dadurch gekennzeichnet,* dass** die Kassetten (3) an Solarmodulen befestigt sind oder Solarmodule integrieren und einen Wasserkreislauf in Kommunikation mit dem in der Pfanne (1) enthaltenen Wasser aufweisen.

12. Struktur nach Anspruch 1, ***dadurch gekennzeichnet,* dass** Metallstangen (11) im Boden der Pfanne (1) integriert sind.

13. Struktur nach Anspruch 12, ***dadurch gekennzeichnet,* dass** die Metallstangen (11) am Traggerüst (8) befestigt sind.

## Claims

1. Floating structure comprising pontoons (P) that are interconnected so as to form at least one closed floating frame of any geometrical shape, and fixed to means for stabilising and anchoring in relation to a body of water, the at least one frame (s) being secured to a sealed pocket (1) intended to be filled with water in order to allow the movement of at least one person, said pocket (1) being fixed to a filtering system (2), the walls of the pocket (1) being provided with flexible thread-like elements (6) that have elastic means (7) for coupling both to a framework (8) that has been secured to the at least one frame or frames and is designed to be submerged in the body of water, and also to a part of the underneath face of the pontoons (P).

2. Structure according to claim 1, ***characterised* in that** the thread-like elements (6) are cables.

3. Structure according to claim 1, ***characterised* in that** the elastic means (7) for coupling are springs, wherein the ends have removable fastening elements (9), on the one hand, to the thread-like elements (6), and on the other hand, to the framework (8) and to the underneath face of the pontoons (P).

4. Structure according to claim 1, ***characterised* in that** the support framework (8) of the pocket (1) is mounted with capacity for movement in height in relation to the pontoons (P) of the frame (s) in order to occupy an out-of-water position and a submerged position.

5. Structure according to claim 4, ***characterised* in that** the support framework (8) comprises a plurality of posts (8a), wherein the one of the ends thereof that is designed to be submerged, is coupled to bars (8b) delimiting a closed perimeter corresponding to that resulting from the inner edges of the frame (s).

6. Structure according to claim 5, ***characterised* in that** the posts (8b) are freely engaged with capacity for movement in height, within the pontoons (P).

7. Structure according to claim 5, ***characterised* in that** each post (8a) is connected at the base thereof, at the connection thereof to the bar (8b) to the outer edges of the frame(s), by means of a flexible cable (10), so as to form a triangulation.

8. Structure according to claim 5, ***characterised* in that** the ends of the posts (8a) viewed opposite the submerged ends thereof, have footings (8c) for supporting and fastening the framework.

9. Structure according to claim 1, ***characterised* in that** the pontoons (P) consist of caissons (3), wherein the inner edges have a profile for anchoring and locking the external perimeter of the pocket (1).

10. Structure according to claim 1, ***characterised* in that** the pocket (1) receives an independent cable (12), on the face thereof.

11. Structure according to claim 9, ***characterised* in that** the caissons (3) are attached to, or integrated with, solar panels, and have a water circulation circuit that is in communication with the water within the pocket (1).

12. Structure according to claim 1, ***characterised* in that** the metallic bars (11) are integrated into the bottom of the pocket (1).

13. Structure according to claim 12, ***characterised* in that** the metallic bars (11) are attached to the support framework (8).
